# EUROPEAN PATENT SPECIFICATION

(11) **EP 2 529 906 B1**
(45) Date of publication and mention of the grant of the patent: **20.08.2014**
(21) Application number: 10844647.7
(22) Date of filing: 22.09.2010
(51) Int. Cl.: B27M 1/02, B27M 3/00

(54) **METHOD FOR PRODUCING COMPRESSED WOOD PRODUCT**
VERFAHREN ZUR HERSTELLUNG EINES KOMPRIMIERTEN HOLZPRODUKTS
PROCÉDÉ PERMETTANT DE PRODUIRE UN PRODUIT EN BOIS COMPRIMÉ

(30) Priority: 26.01.2010 JP 2010014833
(43) Date of publication of application: 05.12.2012
(73) Proprietor: Olympus Corporation, Shibuya-ku Tokyo 151-0072 (JP)
(72) Inventor: NAKANO, Toshifumi, Tokyo 151-0072 (JP); KITAYOSHI, Nobuo, Tokyo 151-0072 (JP)
(74) Representative: Kuhnen & Wacker
(86) International application number: PCT/JP2010/066368
(87) International publication number: WO 2011/092890

(56) References cited:
- JP-A- 2007 160 730
- JP-A- 2009 255 345
- JP-A- 2009 255 385

## Description

### Field

The present invention relates to a method of manufacturing a compressed wood product by compression molding wood into a predetermined three-dimensional shape as per the preamble of claim 1. Such a method is disclosed by JP 2009-255385 A. Background

In recent years, attention has been drawn to wood, which is a natural material. Because wood has various patterns of grain, differences between products are generated depending on the parts of raw wood of which these products are formed and these differences impart individual characteristics to the products. Further, scratches and color changes due to long-term use may add unique feels to the products and make users become attached to the products. For these reasons, attention has been drawn to wood as a material that can be formed into products with individuality and charm, which cannot be obtained from products made of synthetic resin or light metal, and molding techniques of wood are improving dramatically.

Conventionally, a compression molding technique of wood is known, which is a technique of temporarily fixing a slice of wood that has been compressed while being subjected to softening treatment, putting the wood into a mold, and restoring the wood, to obtain wood having a three-dimensional shape (see Patent Literature 1, for example). In this technique, first, the wood that has been softened is compressed and temporarily fixed. Then, a plate obtained by slicing the temporarily fixed wood is set in a metal mold, softened again under high-pressure steam, and subjected to bending. Next, a curved member that has been bent is set in the metal mold again, softened again, and is pressed by a press machine, to be formed into a final shape.

Another compression molding technique of wood is known, which is a technique of subjecting wood to a heating and pressurization treatment as a secondary process after subjecting the wood to a steam heating and pressurization treatment, to manufacture wood having improved dimensional stability by enhancing anti-swelling efficiency (ASE) (see Patent Literature 2, for example). It is described in an embodiment in this literature that the dimensional stability of the wood is improved by subjecting a flat-platy wood to the heating and pressurization treatment.

### Citation List

### Patent Literature

Patent Literature 1: Japanese Patent Application Laid-open No. 11-077619
Patent Literature 2: Japanese Patent No. 2855139 Summary

JP 2009-255385 A discloses a technique for compressing wood with only a single softening step. However, in JP 2009-255385 A tension stress is excessively applied at the time of heat shaping, and therefore there is a high possibility that a crack is generated.

### Technical Problem

However, according to the technique described in the above-mentioned Patent Literature 1, the softening of the wood has to be repeatedly carried out for a plurality of times. As a result, extract included in the wood goes out of the wood, color and luster resulting from seeping of the extract to a surface of the wood cannot be obtained, and it is impossible to bring out texture unique to the wood.

Moreover, in the technique described in the above-mentioned Patent Literature 2, because only embodiments with flat-platy wood are treated, it is unknown how dimensional stability of the wood can be improved when a different manufacturing method is required due to a difference in a shape of wood, like for wood having a complicated three-dimensional shape including a curved face, for example.

The present invention has been made in view of the above and its object is to provide a method of manufacturing a compressed wood product with which the compressed wood product having a three-dimensional shape including a curved face and having excellent dimensional stability and design is obtainable.

### Solution to Problem

To solve the above problems and achieve the object, a method of manufacturing a compressed wood product according to the present invention is a method according to claim 1.

Further, in a preferred method of manufacturing a compressed wood product according to the present invention, in the fixing, fixing of the blank is carried out in a steam atmosphere having a temperature and a pressure higher than those of the ambient air

Further, in a preferred method of manufacturing a compressed wood product according to the present invention, in the compressing, the compressive force is applied to the blank in a steam atmosphere having a temperature and a pressure higher than those of the ambient air and lower than those of the steam atmosphere in which the fixing is carried out.

Further, in a preferred method of manufacturing a compressed wood product according to the present invention, in the compressing and the fixing, the blank is clamped by a pair of convex metal mold and concave metal mold, a surface of a convex portion of the convex metal mold has a shape substantially the same as that of an inner face of the final shape, and a surface area of a concave portion of the concave metal mold is larger than the surface area of the outer face of the final shape.

Further, in a preferred method of manufacturing a compressed wood product according to the present invention, in the heat-shaping, the blank is clamped by a heat-shaping convex metal mold having a convex portion of the same shape as the convex metal mold and a heat-shaping concave metal mold having a concave portion with a surface of the same shape as the outer face of the final shape.

### Advantageous Effects of Invention

According to the invention, softening before the fixing of the wood is carried out once and thus it is possible to minimize outflow of the extract. Moreover, when the wood is heat-shaped in the ambient air, only the outside of the substantially bowl-shaped blank is deformed by the compression and thus tension in the heat- shaping can be minimized and it is possible to achieve dimensional stability while preventing cracking. Therefore, it is possible to obtain a compressed wood product which has the three-dimensional shape including the curved face and is excellent in dimensional stability and design.

### Brief Description of Drawings

FIG. 1 is a flowchart illustrating a general outline of a method of manufacturing a compressed wood product according to an embodiment of the present invention.
FIG. 2 is a drawing schematically illustrating a general outline of a forming process in the method of manufacturing the compressed wood product according to the embodiment of the invention.
FIG. 3 is a drawing schematically illustrating a general outline of a compression process in the method of manufacturing the compressed wood product according to the embodiment of the invention.
FIG. 4 is a sectional view taken along line A-A in FIG. 3.
FIG. 5 is a drawing illustrating a state in which deformation of a blank is almost complete, in the compression process in the method of manufacturing the compressed wood product according to the embodiment of the invention.
FIG. 6 is a perspective view illustrating a structure of the blank after completion of a drying process in the method of manufacturing the compressed wood product according to the embodiment of the invention.
FIG. 7 is a drawing schematically illustrating a general outline of a heat-shaping process in the method of manufacturing the compressed wood product according to the embodiment of the invention.
FIG. 8 is a drawing illustrating a relationship between a concave metal mold and a concave metal mold, which are for heat-shaping.
FIG. 9 is a drawing schematically illustrating a state in which a pair of heat-shaping concave metal mold and heat-shaping convex metal mold is clamped in the heat-shaping process in the method of manufacturing the compressed wood product according to the embodiment of the invention.
FIG. 10 is a perspective view illustrating a structure of the blank after the heat-shaping process in the method of manufacturing the compressed wood product according to the embodiment of the invention.
FIG. 11 is a perspective view illustrating a structure of an outer casing of a digital camera which is an example of application of the compressed wood product manufactured by the method of manufacturing the compressed wood product according to the embodiment of the invention.
FIG. 12 is a perspective view illustrating a structure of an external appearance of the digital camera cased with the outer casing illustrated in FIG. 11.

### Description of Embodiment

An embodiment for carrying out the present invention (hereafter referred to as "embodiment") will be described below with reference to the accompanying drawings. The drawings referred to in the following description are schematic diagrams and different drawings may illustrate the same object with different dimensions and different scales.

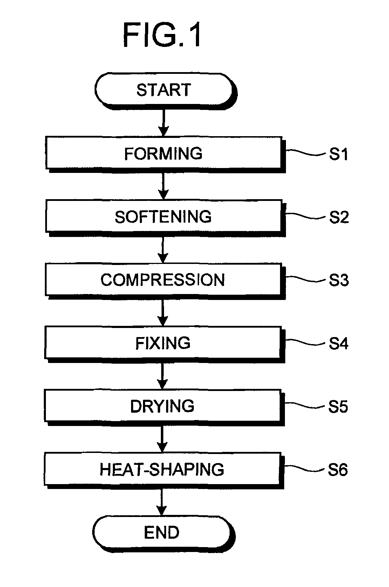

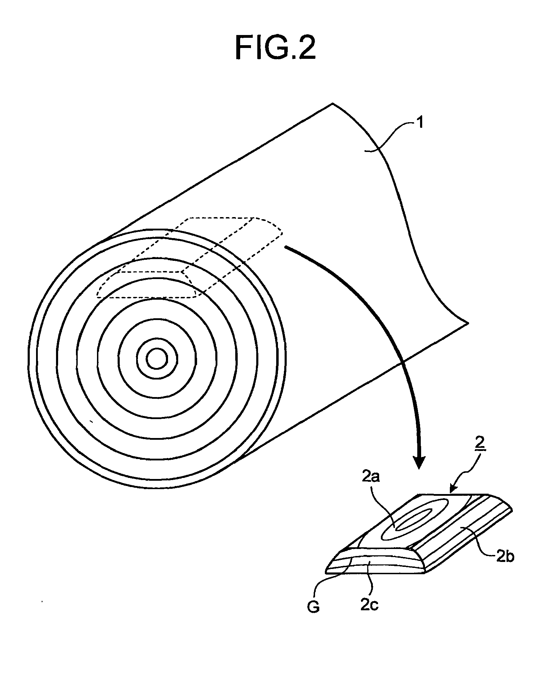

FIG. 1 is a flowchart illustrating a general outline of processes in a method of manufacturing a compressed wood product according to the embodiment of the invention. First, a substantially bowl-shaped blank is formed from raw wood (step S1). FIG. 2 is a drawing schematically illustrating a general outline of a forming process. In the forming process, a substantially bowl-shaped blank 2 is formed, by cutting or the like, out of raw wood 1 such as solid wood, which is not being compressed.

The blank 2 includes a main plate portion 2a which is of a flat platy shape and has a substantially rectangular surface, two side plate portions 2b which curve with respect to the main plate portion 2a and extend respectively from two long sides facing each other at the surface of the main plate portion 2a, and two side plate portions 2c which curve with respect to the main plate portion 2a and extend respectively from two short sides facing each other at the surface of the main plate portion 2a. The blank 2 originally has a volume added with a volume that will be reduced in a compression process described later. Although FIG. 2 illustrates an example in which a piece of flat-grained timber, having the main plate portion 2a with a grain G substantially parallel to a fiber direction of the blank 2, is formed, the blank 2 formed in the forming process may be a piece of quarter-sawn timber or a piece of butt-end lumber. The shape of the blank 2 is merely an example. In other words, the substantially bowl shape mentioned here includes a shape such as a dish shape or a box shape.

Next, the blank 2 formed is left under a high-temperature and high-pressure steam atmosphere for a predetermined time period to be softened (step S2). This steam atmosphere has a pressure of approximately 0.1 to 0.8 MPa and a temperature of approximately 100 to 170 °C. Such a steam atmosphere is achieved by using a pressure container. When the pressure container is used, the blank 2 may be left in the pressure container having the above-described steam atmosphere, to be softened. Instead of softening the blank 2 in the high-temperature and high-pressure steam atmosphere, the blank 2 may be heated with microwave to be softened. The blank 2 may also be boiled to be softened.

Next, the blank 2 that has been softened is compressed (step S3). In this process, in the same steam atmosphere as in the softening process, the blank 2 is clamped with a pair of metal molds and applied with compressive force to be deformed into the substantially bowl shape that differs from its shape before the softening process. If the blank 2 has been softened in the pressure container, the blank 2 may be continuously compressed in the pressure container.

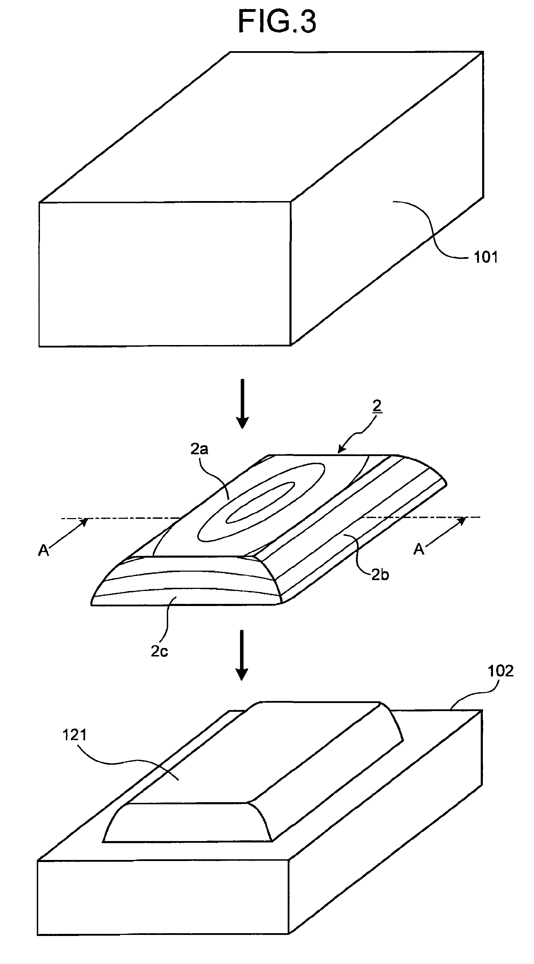

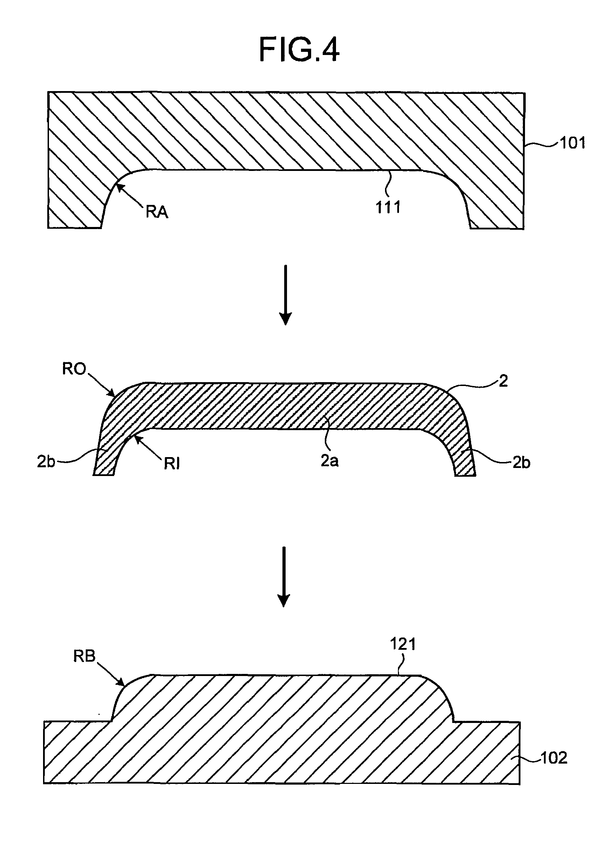

FIG. 3 is a drawing illustrating a general outline of a compression process and a structure of main portions of the metal molds used in the compression process. FIG. 4 is a sectional view taken along line A-A in FIG. 3. As illustrated in FIGS. 3 and 4, the blank 2 is clamped by a pair of concave metal mold 101 and convex metal mold 102 and a predetermined compressive force is applied to the blank 2.

The concave metal mold 101 that applies a compressive force from above the blank 2 in the compression process has a concave portion 111 having a flat and smooth face that comes in contact with a convex outer face of the blank 2. If a curvature radius of a surface of a portion curving from the main plate portion 2a to the side plate portion 2b on a side facing the concave metal mold 101 is RO and a curvature radius of a surface of the concave portion 111 that comes in contact with this surface is RA, the two curvature radii RO and RA satisfy a relationship of RO > RA.

The convex metal mold 102 that applies a compressive force from below the blank 2 in the compression process has a convex portion 121 having a flat and smooth face that comes in contact with a concave inner face of the blank 2. If a curvature radius of a surface of a portion curving from the main plate portion 2a to the side plate portion 2b on a side facing the convex metal mold 102 is RI and a curvature radius of a surface of the convex portion 121 that comes in contact with this surface is RB, the two radii RI and RB satisfy a relationship of RI > RB.

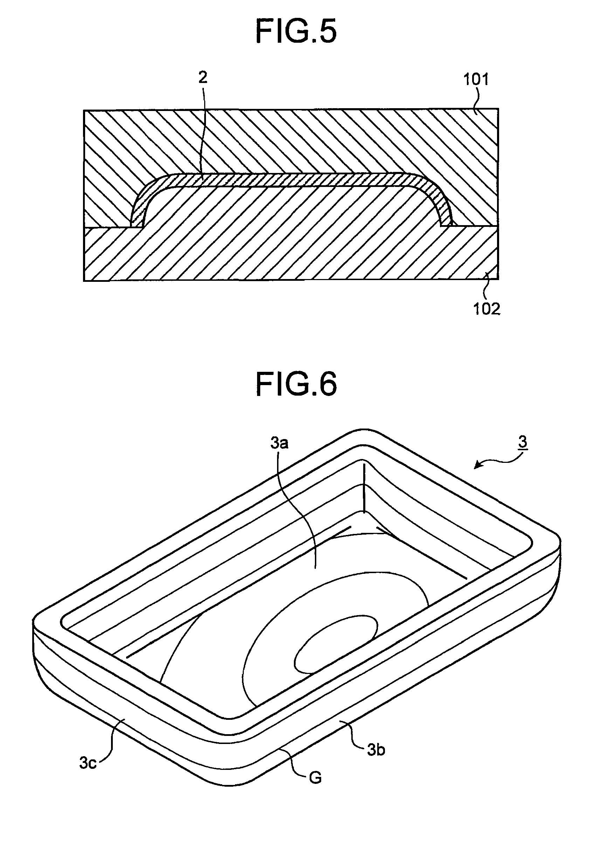

FIG. 5 is a drawing illustrating a state in which the blank 2 is clamped by the concave metal mold 101 and the convex metal mold 102 and is applied with a predetermined pressure and in which deformation of the blank 2 is almost complete in the compression process. In the state illustrated in FIG. 5, the blank 2 is deformed into the substantially bowl shape, which is different from the shape before the softening process, by receiving the compressive forces from the concave metal mold 101 and the convex metal mold 102. The substantially bowl shape mentioned here refers to the shape corresponding to a gap generated by the concave portion 111 and the convex portion 121 when the concave metal mold 101 and the convex metal mold 102 are closest to each other. Here, the surface of the convex portion 121 of the convex metal mold 102 has the same shape as a shape of the compressed wood product to be formed by the method of manufacturing the compressed wood product according to the embodiment, i.e., a shape to be achieved after a heat-shaping process (step S6) described later (hereinafter referred to as "final shape"). Therefore, a shape of the concave inner face of the blank 2 facing the convex portion 121 after the compression process is substantially the same as the final shape. A surface area of the concave portion 111 of the concave metal mold 101 is larger than a surface area of a substantially bowl-shaped outer face of the final shape.

After the compression process is finished, by generating, around the concave metal mold 101 and the convex metal mold 102, a steam atmosphere of a high temperature and a high pressure higher than those of the above-mentioned steam atmosphere while clamping the blank 2 with the concave metal mold 101 and the convex metal mold 102 and maintaining the blank 2 in a predetermined three-dimensional shape, the shape of the blank 2 is fixed (step S4). In this steam atmosphere, the pressure is approximately 0.6 to 3.4 MPa and the temperature is approximately 160 to 240 °C and the pressure and temperature are set to be higher than those of the steam atmosphere in the compression process. If this fixing treatment is carried out in a pressure container, the pressure in the container in the softening process may be set at a value in the above-described range.

Next, the concave metal mold 101, the convex metal mold 102, and the blank 2 are released to the ambient air and the blank 2 is dried (step S5). In this step, the concave metal mold 101 and the convex metal mold 102 may be separated from each other to enhance drying of the blank 2.

FIG. 6 is a perspective view illustrating a structure of the blank (hereinafter referred to as "blank 3") after the end of the drying process. A shape of an inner face of a substantially bowl shape of the blank 3 is closer to the final shape than a shape of its outer face. A thickness of a main plate portion 3a of the blank 3 after the drying process is preferably approximately 20 to 50 % of a thickness of the main plate portion 2a of the blank 2 before the compression process. Here, the blank 3 may vary slightly in thickness. Therefore, in this embodiment, a minimum value of a thickness of the blank 3 is preferably set to be greater than or equal to a thickness of the final shape.

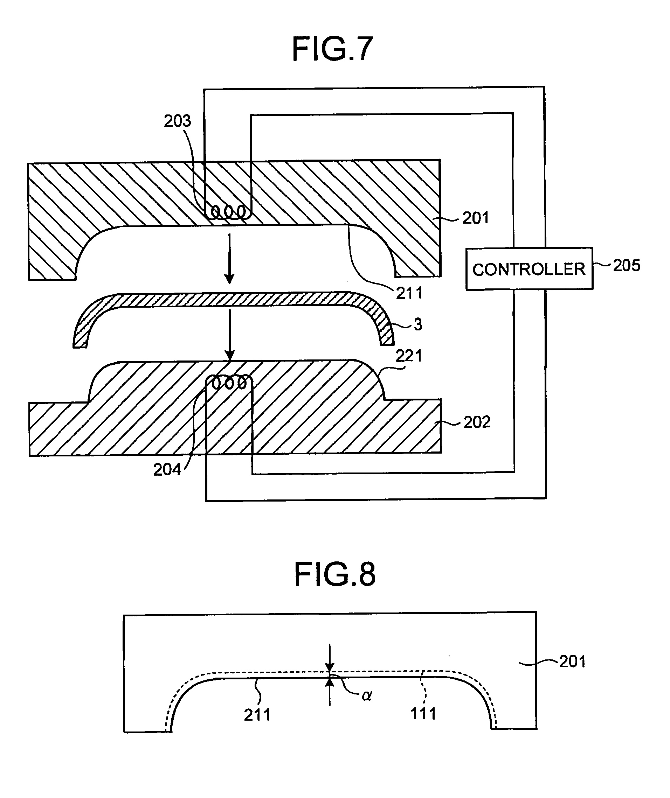

After the drying process, the blank 3 is shaped into a shape substantially similar to the blank 3 while the blank 3 is heated in the ambient air (step S6). FIG. 7 is a drawing schematically illustrating a general outline of the heat-shaping process. In the heat-shaping process, by clamping the blank 3 by using a pair of heat-shaping concave metal mold 201 and heat-shaping convex metal mold 202, the blank 3 is shaped.

The heat-shaping concave metal mold 201 positioned above the blank 3 in FIG. 7 includes a concave portion 211 having a flat and smooth face that comes in contact with a convex surface of the blank 3. As illustrated in FIG. 8, a surface area of the concave portion 211 is smaller than the surface area of the concave portion 111 of the concave metal mold 101 illustrated in FIG. 4 or the like and has a substantially uniform shaping margin α. The shaping margin of a portion that comes in contact with the main plate portion 3a of the blank 3 may be larger than the shaping margin of a portion that comes in contact with side plate portions 3b and 3c. In this manner, how the shaping margin is set may be changed arbitrarily according to the shape of the blank 3 and the final shape.

The heat-shaping convex metal mold 202 positioned below the blank 3 in FIG. 7 includes a convex portion 221 having a flat and smooth face that comes in contact with a concave surface of the blank 3. A shape of the convex portion 221 is the same as that of the convex portion 121 of the convex metal mold 102 illustrated in FIG. 4 or the like.

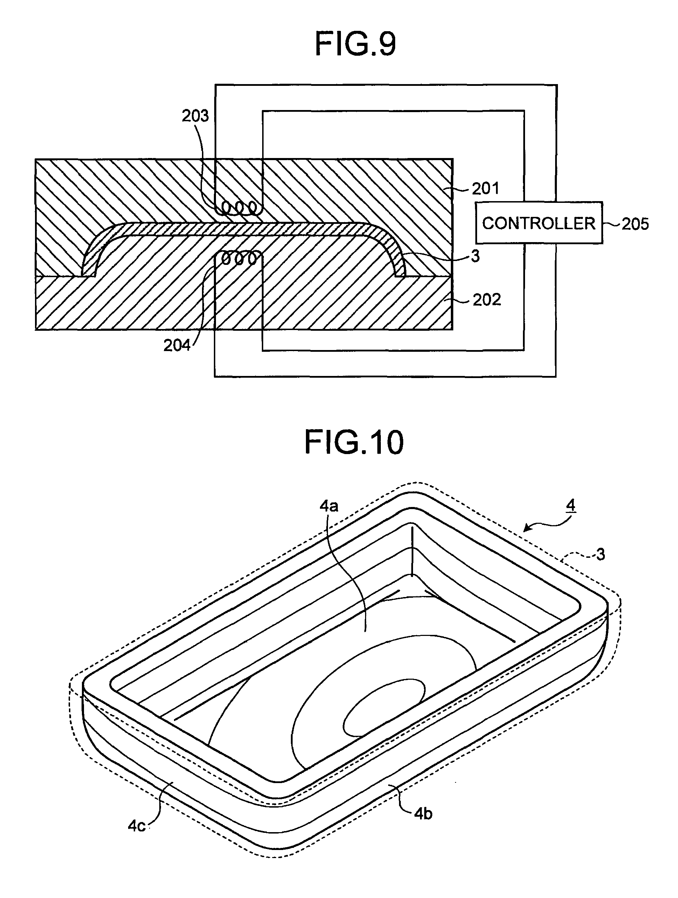

As illustrated in FIG. 9, a shape of a gap generated by the concave portion 211 and the convex portion 221 when the heat-shaping concave metal mold 201 and the heat-shaping convex metal mold 202 are clamped together corresponds to the final shape. A volume of the final shape is smaller than a volume of the blank 3 by a volume which is reduced in the heat-shaping process. Although the shape of the blank 3 after the heat-shaping process preferably coincides with the final shape, there are individual differences between the individual blanks 3 and therefore the shape of the blank 3 after the heat-shaping process may have a slight error with respect to the final shape.

Inside the heat-shaping concave metal mold 201 and the heat-shaping convex metal mold 202, heaters 203 and 204 that generate heat are provided, respectively. The heaters 203 and 204 are each connected to a controller 205 having a temperature control function, generate heat under control of the controller 205, and apply heat to each of the heat-shaping concave metal mold 201 and the heat-shaping convex metal mold 202. The controller 205 controls a metal mold temperature upon clamping of the blank 3 to be higher than or equal to a temperature at which a non-crystalline region of a xylem portion is crystallized and lower than or equal to a thermal decomposition temperature of the xylem portion.

In this manner, by controlling the metal mold temperature by the controller 205, density of the xylem portion increases further simultaneously with proceeding of the crystallization of the xylem portion during the heat-shaping process and therefore surface hardness of the xylem portion increases. As a result, it is possible to obtain the compressed wood product without moisture absorption and excellent in shape stability.

Because the shaping margin is provided to the outer surface of the blank 3 facing the concave portion 211, it is possible to minimize tension acting on the outer surface of the blank 3 during the heat-shaping. Therefore, it is possible to prevent cracking or the like of the surface of the blank 3 during the heat-shaping.

By heat-shaping the surface of the blank 3 in the ambient air, substances included inside cell walls of the xylem portion are extracted to the surface to give color and luster to that surface. As a result, it is possible to bring out the texture unique to the wood.

FIG. 10 is a perspective view illustrating a structure of a compressed wood product obtained by heat-shaping the blank 3. A compressed wood product 4 illustrated in this figure has a main plate portion 4a and side plate portions 4b and 4c respectively corresponding to the main plate portion 3a and the side plate portions 3b and 3c of the blank 3. A broken line illustrated in FIG. 10 illustrates a periphery of the blank 3. In other words, the compressed wood product 4 has a shape such that a surface area of an outer face of the compressed wood product 4 is smaller than the surface area of the outer face of the blank 3. An inner face of the compressed wood product 4 has substantially the same shape as the inner face of the blank 3.

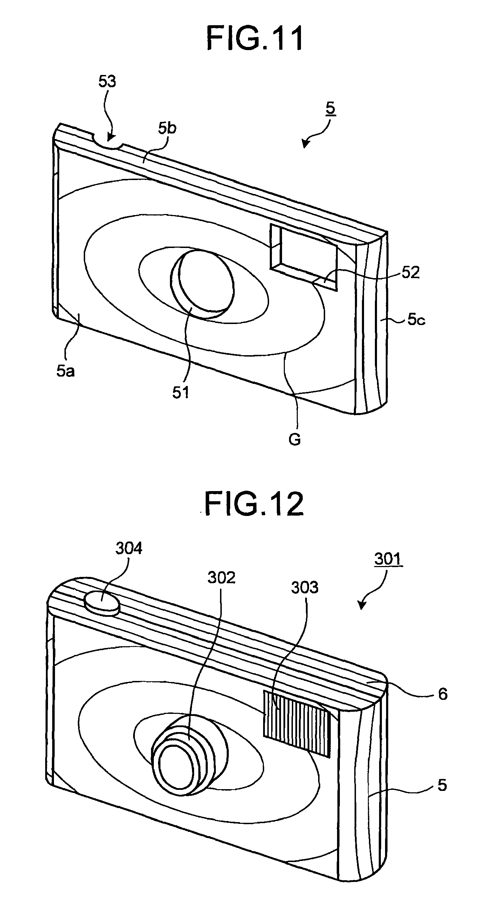

FIG. 11 is a perspective view illustrating a structure of an outer casing of a digital camera which is an example of application of the compressed wood product manufactured by the above-described method of manufacturing the compressed wood product. An outer casing 5 illustrated in this figure cases a front face side (the side facing an object to be photographed) of the digital camera and includes a main plate portion 5a and side plate portions 5b and 5c respectively corresponding to the main plate portion 4a and the side plate portions 4b and 4c of the compressed wood product 4. The main plate portion 5a includes a cylindrical aperture portion 51 through which an imaging unit of the digital camera appears and an aperture portion 52 which is rectangular parallelepiped and through which a flash of the digital camera appears. The side plate portion 5b has a half cylindrical notch 53 through which a shutter button appears.

FIG. 12 is a perspective view illustrating a structure of an external appearance of the digital camera having the front face side cased by the outer casing 5. A digital camera 301 illustrated in this figure includes an imaging unit 302, a flash 303, and a shutter button 304. The front face side of the digital camera 301 on which the imaging unit 302 and the flash 303 appear is cased by the outer casing 5. A back face side of the digital camera 301 is cased by an outer casing 6 formed similarly to the outer casing 5 by using the compressed wood product 4. As described, when the compressed wood product manufactured by the method of manufacturing the compressed wood product according to the embodiment is applied to the outer casing of the digital camera, the thickness is preferably approximately 1.0 to 1.6 mm.

According to the embodiment of the invention described above, the softening before fixing the wood is carried out once and therefore it is possible to minimize outflow of the extract. Moreover, when heat-shaping the wood in the ambient air, only the outside of the substantially bowl-shaped blank is deformed due to the compression and therefore it is possible to minimize the tension in the heat-shaping and to achieve dimensional stability while preventing cracking. As a result, it is possible to obtain the compressed wood product which has the three-dimensional shape including the curved face and which is excellent in dimensional stability and design.

Furthermore, according to the embodiment, because the softening process of the wood is carried out only once, it is possible to shorten a time period for manufacturing and to reduce cost required for the manufacture.

As described, the invention may include various embodiments not described here and various changes in design may be made without departing from a technical idea defined by the claims.

### Industrial Applicability

The compressed wood product manufactured by the method of manufacturing the compressed wood product according to the invention is also applicable to outer casings for electronic devices other than digital cameras. The compressed wood product manufactured by the method of manufacturing the compressed wood product according to the invention is also applicable to tableware, various casings, building materials, and the like.

### Reference Signs List

- 1: RAW WOOD
- 2, 3: BLANK
- 2a, 3a, 4a, 5a: MAIN PLATE PORTION
- 2b, 2c, 3b, 3c, 4b, 4c, 5b, 5c: SIDE PLATE PORTION
- 4: COMPRESSED WOOD PRODUCT
- 5, 6: OUTER CASING
- 101: CONCAVE METAL MOLD
- 102: CONVEX METAL MOLD
- 111, 121: CONCAVE PORTION
- 121, 221: CONVEX PORTION
- 201: HEAT-SHAPING CONCAVE METAL MOLD
- 202: HEAT-SHAPING CONVEX METAL MOLD
- 203, 204: HEATER
- 205: CONTROLLER
- 301: DIGITAL CAMERA
- 302: IMAGING UNIT
- 303: FLASH
- 304: SHUTTER BUTTON
- G: GRAIN

## Claims

1. A method of manufacturing, by compressing wood, a compressed wood product (4) having a three-dimensional shape including a curved face, the method comprising:
softening a blank (2) formed of a substantially bowl-shaped wood;
compressing the blank (2), the compressing being deforming the blank (2) that has been softened into a substantially bowl shape different from that before the softening, by applying a compressive force to the blank (2) ;
fixing the shape of the blank (2) that has been deformed in the compressing by applying the compressive force;
drying the blank (2) having the shape that has been fixed in the fixing; and
heat-shaping the blank (3), the heat-shaping being shaping the blank (3) that has been dried in the drying into a shape substantially similar to the shape of the blank (3) while heating the blank in the ambient air,
**characterized in that** the blank (3) after the drying and before the heat-shaping has an inner face of the substantially bowl shape, the inner face having a shape closer to a final shape to be achieved after the heat-shaping than a shape of an outer face of the substantially bowl shape, and a surface area of the outer face is larger than a surface area of an outer face of the final shape.

2. The method of manufacturing a compressed wood product (4) according to claim 1, wherein, in the fixing, fixing of the blank (2) is carried out in a steam atmosphere having a temperature and a pressure higher than those of the ambient air.

3. The method of manufacturing a compressed wood product (4) according to claim 2, wherein, in the compressing, the compressive force is applied to the blank (2) in a steam atmosphere having a temperature and a pressure higher than those of the ambient air and lower than those of the steam atmosphere in which the fixing is carried out.

4. The method of manufacturing a compressed wood product (4) according to any one of claims 1 to 3, wherein, in the compressing and the fixing,
the blank (2) is clamped by a pair of convex metal mold (102) and concave metal mold (101),
a surface of a convex portion (121) of the convex metal mold (102) has a shape substantially the same as that of an inner face of the final shape, and
a surface area of a concave portion (111) of the concave metal mold (101) is larger than the surface area of the outer face of the final shape.

5. The method of manufacturing a compressed wood product (4) according to claim 4, wherein, in the heat-shaping, the blank (3) is clamped by a heat-shaping convex metal mold (202) having a convex portion (221) of the same shape as the convex metal mold (102) and a heat-shaping concave metal mold (201) having a concave portion (211) with a surface of the same shape as the outer face of the final shape.

## Patentansprüche

1. Verfahren zum Herstellen eines Pressholzprodukts (4), das eine dreidimensionale Form mit einer gebogenen Fläche beinhaltet, durch Pressen von Holz, wobei das Verfahren aufweist:
Aufweichen eines Rohlings (2), der aus im Wesentlichen schalenförmigem Holz besteht;
Pressen des Rohlings (2), wobei das Pressen ein Verformen des Rohlings (2), der aufgeweicht wurde, in eine im Wesentlichen schalenförmige Form ist, die sich von der Form vor dem Aufweichen unterscheidet, indem eine Presskraft auf den Rohling (2) ausgeübt wird;
Fixieren der Form des Rohlings (2), der während des Pressens durch Ausüben der Presskraft verformt wurde;
Trocknen des Rohlings (2), der die Form aufweist, die beim Fixieren fixiert wurde; und
Wärmeformen des Rohlings (3), wobei das Wärmeformen ein Verformen des Rohlings (3) ist, der während des Trocknens in einer Form getrocknet wurde, die im Wesentlichen der Form des Rohlings (3) ähnelt, während der Rohling in der Umgebungsluft erwärmt wird,
**dadurch gekennzeichnet, dass** der Rohling (3) nach dem Trocknen und vor dem Wärmeformen eine Innenfläche mit im Wesentlichen schüsselförmiger Form aufweist, wobei die Innenfläche eine Form aufweist, die näher an einer nach dem Wärmeformen zu erreichenden endgültigen Form, liegt als eine Form einer Außenfläche der im Wesentlichen schalenförmigen Form, und wobei ein Flächeinhalt der Außenfläche größer ist als ein Flächeninhalt einer Außenfläche der endgültigen Form.

2. Verfahren zum Herstellen eines Pressholzprodukts (4) nach Anspruch 1, wobei während des Fixierens ein Fixieren des Rohlings (2) in einer Dampfumgebung mit einer Temperatur und einem Druck durchgerührt wird, die höher sind als die von der Umgebungsluft.

3. Verfahren zum Herstellen eines Pressholzprodukts (4) nach Anspruch 2, wobei während des Pressens die Presskraft auf den Rohling (2) in einer Dampfumgebung mit einer Temperatur und einem Druck ausgeübt wird, die höher sind als die von der Umgebungsluft und niedriger als die von der Dampfatmosphäre, in der das Fixieren durchgeführt wird.

4. Verfahren zum Herstellen eines Pressholzprodukts (4) nach einem der Ansprüche 1 bis 3, wobei während des Pressens und Verfestigens
der Rohling (3) von einem Paar bestehend aus einer konvexen Metallform (102) und einer konkaven Metallform (101) eingeklemmt wird,
eine Oberfläche eines konvexen Abschnitts (121) der konvexen Metallform (102) eine Form aufweist, die im Wesentlichen der Form einer Innenfläche der endgültigen Form gleicht, und
ein Flächeninhalt eines konkaven Abschnitts (111) der konkaven Metallform (101) größer ist als der Flächeninhalt der Außenfläche der endgültigen Form.

5. Verfahren zum Herstellen eines Pressholzprodukts (4) nach Anspruch 4, wobei der Rohling (3) während der Wärmeformung von einer konvexen Wärmeformungs-Metallform (202) mit einem konvexen Abschnitt (221) der gleichen Form wie die konvexe Metallform (102) und von einer konkaven Wärmeformungs-Metallform (201) mit einem konkaven Abschnitt (211) mit einer Oberfläche mit derselben Form wie die Außenfläche der endgültigen Form geklemmt wird.

## Revendications

1. Procédé de fabrication, par compression de bois, d'un produit en bois comprimé (4) ayant une forme tridimensionnelle incluant une face incurvée, le procédé comprenant :
le ramollissement d'une ébauche (2) formée d'un bois sensiblement en forme de cuvette ;
la compression de l'ébauche (2), la compression étant la déformation de l'ébauche (2) qui a été ramollie en une forme sensiblement de cuvette différente de celle avant le ramollissement, en appliquant une force de compression à l'ébauche (2) ;
le figement de la forme de l'ébauche (2) qui a été déformée lors de la compression en appliquant la force de compression ;
le séchage de l'ébauche (2) ayant la forme qui a été figée lors du figement ; et
le thermoformage de l'ébauche (3), le thermoformage étant le formage de l'ébauche (3) qui a été séchée lors du séchage en une forme sensiblement similaire à la forme de l'ébauche (3) tout en chauffant l'ébauche à l'air ambiant,
**caractérisé en ce que** l'ébauche (3) après le séchage et avant le thermoformage a une face interne de la forme sensiblement de cuvette, la face interne ayant une forme plus proche d'une forme finale à atteindre après le thermoformage que d'une forme d'une face externe de la forme sensiblement de cuvette, et une superficie de la face externe est plus grande qu'une superficie d'une face externe de la forme finale.

2. Procédé de fabrication d'un produit en bois comprimé (4) selon la revendication 1, dans lequel, lors du figement, le figement de l'ébauche (2) est réalisé dans une atmosphère de vapeur ayant une température et une pression plus élevées que celles de l'air ambiant.

3. Procédé de fabrication d'un produit en bois comprimé (4) selon la revendication 2, dans lequel, lors de la compression, la force de compression est appliquée à l'ébauche (2) dans une atmosphère de vapeur ayant une température et une pression plus élevées que celles de l'air ambiant et plus basses que celles de l'atmosphère de vapeur dans laquelle le figement est réalisé.

4. Procédé de fabrication d'un produit en bois comprimé (4) selon l'une quelconque des revendications 1 à 3, dans lequel, lors de la compression et du figement,
l'ébauche (2) est serrée par une paire de moule métallique convexe (102) et de moule métallique concave (101),
une surface d'une partie convexe (121) du moule métallique convexe (102) a une forme sensiblement identique à celle d'une face interne de la forme finale, et
une superficie d'une partie concave (111) du moule métallique concave (101) est plus grande que la superficie de la face externe de la forme finale.

5. Procédé de fabrication d'un produit en bois comprimé (4) selon la revendication 4, dans lequel, lors du thermoformage, l'ébauche (3) est serrée par un moule métallique convexe de thermoformage (202) ayant une partie convexe (221) de la même forme que le moule métallique convexe (102) et un moule métallique concave de thermoformage (201) ayant une partie concave (211) avec une surface de la même forme que la face externe de la forme finale.
